# EUROPÄISCHE PATENTSCHRIFT

(11) **EP 2 799 847 B1**
(45) Veröffentlichungstag und Bekanntmachung des Hinweises auf die Patenterteilung: **24.10.2018**
(21) Anmeldenummer: 13002358.3
(22) Anmeldetag: 03.05.2013
(51) Int. Cl.: G01N 21/88, G01N 21/95, G01B 11/24, G01N 21/952, G06T 7/00, G06T 3/40

(54) **Verfahren zur optischen Prüfung der Oberflächen von Gegenständen**
Method for optically testing the surfaces of objects
Procédé de contrôle optique de surfaces d'objets

(43) Veröffentlichungstag der Anmeldung: 05.11.2014
(73) Patentinhaber: Compar AG, 8808 Pfäffikon SZ (CH)
(72) Erfinder: Grossmann, Johann, 8633 Wolfhausen (CH)
(74) Vertreter: Schaad, Balass, Menzl & Partner AG

(56) Entgegenhaltungen:
- GB-A- 2 262 339
- US-A1- 2002 154 811
- US-A1- 2009 279 083

## Beschreibung

Die vorliegende Erfindung betrifft ein Verfahren zur optischen Prüfung der Oberfläche eines Gegenstandes gemäss Patentanspruch 1.

Allgemein bekannt sind Verfahren, bei welchen die Oberfläche von Gegenständen mittels Zeilenkameras zu einer Bildaufnahme abgescannt wird. Dabei wird eine einzige definierte Beleuchtung, beispielsweise eine Dunkelfeldbeleuchtung, ein Streiflicht oder eine Auflichtbeleuchtung verwendet.

Aus der GB-A-2262 339 ist ein Verfahren zur optischen Ermittlung von Planheitsfehlern eines Werkstücks durch Bildverarbeitung von digitalen Bildern der Werkstücksoberfläche im Auflicht bekannt.

Weiter sind Verfahren bekannt, bei welchen mittels Flächenkameras Bilder der Oberfläche des Gegenstandes in einigen wenigen unterschiedlichen Lagen des Gegenstandes aufgenommen und die Bilder dann einzeln analysiert werden. Diesen bekannten Verfahren ist gemeinsam, dass sie nur vordefinierte, beschränkte Bildaufnahme- und Auswertungsmöglichkeiten zulassen.

In der US-A-2009/0279083 werden eine Vorrichtung und ein Verfahren zur optischen Identifizierung eines Gewindeganganfangs und Gewindeprofils einer Gewindebohrung in einem Gegenstand offenbart. Die Vorrichtung umfasst eine mit einer Optik ausgerüstete Sonde zur Einführung in die Gewindebohrung und eine Kamera, die eine Folge von Bildern der Gewindebohrung über die Sonde während deren Bewegung aufnimmt. Ein Bereich von diesen Bildern wird jeweils extrahiert und diese extrahierten Bereiche werden zu einem Oberflächenbild des Gegenstandes zusammengesetzt.

Aus der US-A-2002/0154811 sind eine Vorrichtung und ein Verfahren zur zerstörungsfreien Inspektion von einem Gegenstand bekannt, um Fehler an der Oberfläche dieses Gegenstandes zu detektieren. Das Verfahren umfasst eine digitale Bildaufnahme des beleuchteten Gegenstandes mit einer Kamera und einer Optik, eine Speicherung dieser Bilder, eine Extraktion durch digitale Bildverarbeitung von Bildern, die einen Fehler an der Oberfläche des Werkstücks zeigen, und eine Speicherung dieser extrahierten Bilder zusammen mit den zugehörigen Daten.

Es ist deshalb eine Aufgabe der vorliegenden Erfindung, ein Verfahren zu schaffen, welches eine grosse Flexibilität zulässt.

Diese Aufgabe wird mit einem Verfahren gemäss Patentanspruch 1 gelöst.

Erfindungsgemäss werden ein Gegenstand, dessen Oberfläche zu prüfen ist, und eine Flächenkamera relativ zueinander, vorzugsweise in einer bestimmten Richtung, bewegt. Während dieser Relativbewegung wird vom Gegenstand mit der Flächenkamera eine Folge von Bildern aufgenommen.

Der Gegenstand wird während des Aufnehmens der Folge der Bilder mittels der Flächenkamera mit einer Beleuchtungseinrichtung beleuchtet. Dies ermöglicht einerseits die Aufnahme einer grossen Anzahl qualitativ guter Bilder in kurzer Zeit, und andererseits, Oberflächenbilder entsprechend bestimmter Beleuchtungscharakteristiken zu erzeugen. So kann beispielsweise eine Beleuchtungseinrichtung eingesetzt werden, welche Auflicht erzeugt. Es ist auch möglich, mittels der Beleuchtungseinrichtung eine Dunkelfeldbeleuchtung herzustellen oder mittels der Beleuchtungseinrichtung Durchlicht zu erzeugen.

Durchlicht eignet sich insbesondere zur Extraktion und Überprüfung des Profils der Oberfläche. Mittels Auflicht und einer Dunkelfeldbeleuchtung lassen sich unterschiedliche Fehler der Oberfläche im Oberflächenbild besonders aussagekräftig darstellen, indem mittels Auflicht und Extraktionen mit Auflichtcharakteristik und Dunkelfeldcharakteristik Fehler beispielsweise dunkel statt hell oder verfärbt erscheinen. Es sind Kratzer, Dellen, Vorsprünge, Bedruckungen, Schmutz und dergleichen gleichzeitig und besonders gut erkennbar.

Es kann der Gegenstand mit Auflicht beleuchtet werden, wobei sich (nur) ein Teil des Gegenstandes im Auflicht befindet. Nachträglich kann aus den mit Auflichtbeleuchtung aufgenommenen Bildern des Gegenstandes ein erster Bereich mit Auflichtcharakteristik und ein zweiter Bereich - im Übergangsbereich von Auflicht und nicht beleuchtetem Teil des Gegenstandes - entsprechend einer Dunkelfeldcharakteristik extrahiert werden.

Die Anzahl Bilder der Folge ist gross, vorzugsweise über hundert, bevorzugt einige Hundert.

Weiter überlappen sich aufeinanderfolgende Bilder jeweils stark. Das heisst beispielsweise zu mehr als 90%, besonders bevorzugt zu mehr als 98%, besonders bevorzugt zu mehr als 99%.

Die Bilder werden alle gespeichert, und von den gespeicherten Bildern wird nachträglich jeweils ein Bereich extrahiert. Diese extrahierten Bereiche werden zu einem die Oberfläche des Gegenstandes wiedergebenden Oberflächenbild zusammengesetzt.

Die Bilder können entweder in der Flächenkamera oder in einem Rechner gespeichert werden. Das Extrahieren der Bereiche und das Zusammensetzen der extrahierten Bereiche zum Oberflächenbild geschieht mittels des Rechners. Es wird ein synthetisiertes Oberflächenbild erzeugt.

Der aus den Bildern zu extrahierende Bereich kann entweder automatisch oder manuell festgelegt werden.

Da die grosse Anzahl Bilder gespeichert wird, können nachträglich unterschiedliche Oberflächenbilder erzeugt werden, indem von jedem der gespeicherten Bilder die betreffenden Bereiche, beispielsweise einer bestimmten Beleuchtungscharakteristik entsprechend, extrahiert und zu neuen Oberflächenbildern zusammengesetzt werden.

Es können durch entsprechende Extraktion Oberflächenbilder für verschiedene Beleuchtungsarten aus der einzigen Folge von Bildern gewonnen werden.

Bevorzugt weist der zu extrahierende Bereich die Form eines Streifens auf. Bevorzugt verläuft dieser Streifen wenigstens annähernd rechtwinklig zur Richtung der Relativbewegung.

Die Breite des Streifens wird bevorzugt derart gewählt, dass sie der Differenz zwischen der effektiven Überlappung der Bilder und einer vollständigen Überlagerung entspricht. Das daraus synthetisierte Oberflächenbild ist dann eine kontinuierliche Abbildung der Oberfläche des Gegenstandes.

Weiter erstreckt sich der Streifen bevorzugt über die gesamte Ausdehnung des Gegenstandes, gesehen in Längsrichtung des Streifens.

Es ist jedoch auch möglich, dass der Streifen kürzer ist als die gesamte Ausdehnung. Dies insbesondere dann, wenn nur ein Teil der Oberfläche zu prüfen ist.

Bevorzugt wird der Gegenstand im Sichtfeld der Flächenkamera gedreht. Dabei befindet sich bevorzugt der gesamte Gegenstand jeweils im Sichtfeld. Das Drehen des Gegenstandes ermöglicht, aus der Folge der Bilder Abwicklungen zu synthetisieren.

Bevorzugt ist die Flächenkamera stationär angeordnet und wird der Gegenstand bewegt.

Bevorzugt wird der Gegenstand um eine Drehachse vollständig gedreht, wobei diese Drehachse bevorzugt zur optischen Achse der Flächenkamera rechtwinklig verläuft. Diese Ausführungsform ist besonders geeignet, wenn der Gegenstand zu einer Längsachse wenigstens annähernd rotationssymmetrisch ausgebildet ist. In diesem Fall fällt bevorzugt die Längsachse mit der Drehachse wenigstens annähernd zusammen.

Es sei erwähnt, dass insbesondere bei dieser Ausführungsform ergänzend zur Oberflächenkontrolle durch die Erzeugung des Oberflächenbildes auch eine Kontrolle des Profils des Gegenstandes gemacht werden kann.

Durch aneinanderreihen der Profile kann gleichzeitig ein Tiefenbild der Oberfläche (3D) erzeugt werden.

Bevorzugt wird der Gegenstand während der Aufnahme der Folge der Bilder mit zwei vorzugsweise unterschiedlichen Beleuchtungseinrichtungen gleichzeitig beleuchtet. Da vom Gegenstand eine Folge von einer grossen Anzahl Bilder gemacht wird, erscheint dessen Oberfläche in jedem der Bilder entsprechend der Beleuchtungscharakteristiken der Beleuchtungseinrichtungen.

Bevorzugt wird der Gegenstand mittels Auflicht und einer Dunkelfeldbeleuchtung beleuchtet. Dies hat auch den Vorteil, dass im Randbereich des Auflichts eine Dunkelfeldcharakteristik erzeugt wird, insbesondere wenn die Oberfläche des Gegenstandes gekrümmt ist. Von besonderem Vorteil ist diese Ausführungsform bei der Kontrolle der Oberfläche von wenigstens annähernd rotationssymmetrischen Gegenständen.

Ein besonderer Vorteil des erfindungsgemässen Verfahrens liegt darin, dass aus den Bildern wenigstens zwei oder mehr Bereiche extrahiert werden können, und die einander entsprechenden extrahierten Bereiche zu unterschiedlichen Oberflächenbildern zusammengesetzt werden können.

Der aus den Bildern extrahierte Bereich kann mittels allgemein bekannten Bildverarbeitungsmethoden bearbeitet werden. Aus den bearbeiteten Bereichen wird dann ein synthetisches Oberflächenbild zusammengesetzt.

Bevorzugt wird aus den Bildern ein erster Bereich extrahiert, in welchem ein Rand des Gegenstandes liegt beziehungsweise erkennbar ist. Aufgrund des Ortes dieses Randes beziehungsweise Profiles in den Bildern beziehungsweise im ersten Bereich kann ein zweiter Bereich nachgeführt und extrahiert werden. Der extrahierte zweite Bereich der Bilder wird dann zum Oberflächenbild zusammengesetzt. Dadurch lässt sich beispielsweise bei rotationssymmetrischen Gegenständen der Unrundlauf erkennen, und gleichzeitig lässt sich der zweite Bereich relativ zum Unrundlauf stationär halten. Selbstverständlich ist es auch dabei möglich, dass mehrere unterschiedliche Bereiche aus den Bildern extrahiert werden, welche relativ zum Rand des Gegenstandes stationär sind.

Es sei auch erwähnt, dass bei der Bearbeitung des extrahierten Bereichs der Bilder, in welchem der Rand des Gegenstandes liegt, der Lage des Randes unterschiedliche Grauwerte oder Farben zugeordnet werden können, und daraus ein 3D-Bild des Gegenstandes erzeugt werden kann. Dazu eignet sich insbesondere die Beleuchtung mit Durchlicht.

Nur der Vollständigkeit halber sei erwähnt, dass Flächenkameras eine grosse Matrix von Bildpixeln aufweisen, mittels welchen zweidimensionale Bilder aufgenommen werden. Es können Flächenkameras verwendet werden, welche bevorzugt ein Megapixel und mehr aufweisen.

Der zu extrahierende Bereich in den Bildern kann die Höhe eines einzigen Pixels aufweisen. Der weiter oben genannte Streifen hat dann die Breite eines Pixels. Der zu extrahierende Bereich kann jedoch die Höhe mehrerer Pixel haben; entsprechend weist der Streifen eine Breite mit der entsprechenden Anzahl Pixel auf.

Weiter kann ein zu extrahierender Bereich aus mehreren Teilbereichen bestehen, welche jedoch einander fest zugeordnet sind. Insbesondere können die Teilbereiche in Richtung einer Geraden hintereinander liegen. Der genannte Streifen setzt sich dann aus in Richtung des Streifens hintereinander angeordneten Teilstreifen, vorzugsweise alle mit derselben Breite, zusammen.

Das synthetisierte Oberflächenbild kann rechnergestützt mit einem Sollbild verglichen oder auf die Zulässigkeit beziehungsweise Unzulässigkeit von Fehlern und Abweichungen überprüft werden. Es ist auch eine Überprüfung des synthetisierten Oberflächenbildes von Auge denkbar.

Das erfindungsgemässe Verfahren eignet sich auch für die Erzeugung eines synthetisierten Oberflächenbildes von flachen Gegenständen. Der Gegenstand wird dabei in einer bestimmten Richtung relativ zur Flächenkamera beispielsweise geradlinig bewegt, welche wiederum in rascher Folge die Bilder des Gegenstandes aufnimmt.

Die vorliegende Erfindung wird anhand eines in der Zeichnung gezeigten Ausführungsbeispiels näher erläutert.

Es zeigen rein schematisch:
- Fig. 1: in Ansicht eine Vorrichtung zur Durchführung des erfindungsgemässen Verfahrens;
- Fig. 2: in der Draufsicht die vorrichtung zur Durchführung des erfindungsgemässen Verfahrens;
- Fig. 3: einige mittels einer Flächenkamera aufgenommene Bilder der Folge von Bildern eines in Drehung versetzten Gegenstandes;
- Fig. 4: ein erstes Bild der Folge der aufgenommenen Bilder;
- Fig. 5: das achtunddreissigste Bild der Folge der aufgenommenen Bilder;
- Fig. 6: das sechsundsiebzigste Bild der Folge der Bildaufnehmen des in Drehung versetzten Gegenstandes;
- Fig. 7: das gleiche Bild wie Fig. 6, jedoch mit drei angedeuteten Bereichen, welche aus den gespeicherten Bildern extrahiert und zu einem entsprechenden Oberflächenbild zusammengesetzt werden;
- Fig. 8: ein Bild aus der Folge von Bildern, ergänzt mit der aus dem extrahierten Bereich ermittelten Aussenkontur des Gegenstandes;
- Fig. 9: ein aus extrahierten Bereichen gemäss Fig. 8 synthetisiertes Oberflächenbild, wobei der besseren Übersichtlichkeit halber nur einige der Bilder berücksichtigt sind;
- Fig. 10: ein aus den gleichen extrahierten Bereichen wie bei Fig. 9 erzeugtes, weiteres Oberflächenbild, wobei die ermittelten Aussenkonturen aufeinanderfolgend schräg versetzt aneinander angereiht sind;
- Fig. 11: ein Oberflächenbild zusammengesetzt aus den extrahierten Bereichen gemäss Fig. 7; und
- Fig. 12: ein Oberflächenbild synthetisiert aus dem weiteren Bereich gemäss Fig. 7.

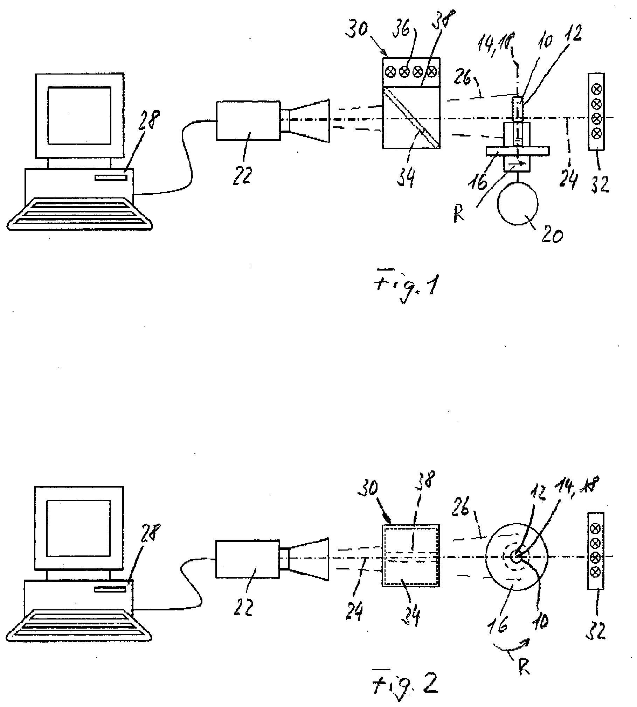

Die Figuren 1 und 2 zeigen in Ansicht und Draufsicht eine Vorrichtung zur Durchführung des erfindungsgemässen Verfahrens zur optischen Prüfung der Oberfläche 10 eines Gegenstandes 12, einem sogenannten Prüfling. Im gezeigten Ausführungsbeispiel geht es um die optische Prüfung der mantelseitigen Oberfläche des zu seiner Längsachse 14 wenigstens annähernd rotationssymmetrischen Gegenstandes 12.

Der Gegenstand 12 ist auf einem Drehteller 16 angeordnet, wobei die Längsachse 14 des Gegenstandes 12 mit der Drehachse 18 bevorzugt zusammenfällt. Der Drehteller 16 ist um seine hier in vertikaler Richtung verlaufende Drehachse 18 mit konstanter Geschwindigkeit in einer Richtung R, hier Drehrichtung R, drehend angetrieben. Im gezeigten Ausführungsbeispiel dreht sich der Drehteller 16 beispielsweise in dreissig Sekunden einmal um seine Drehachse 18.

Ein den Drehteller 16 antreibender Motor 20 ist bevorzugt mit einem Encoder versehen, um die jeweilige Drehposition des Drehtellers 16 und somit des Gegenstands 12 zu kennen. Weiter weist die Vorrichtung eine Flächenkamera 22 auf. Sie ist beispielsweise mit einer Matrix von 1'628 mal 1'236 Bildpunkten versehen. Es sind jedoch Flächenkameras unterschiedlicher Auflösungen einsetzbar.

Im gezeigten Ausführungsbeispiel schneidet die optische Achse 24 der Flächenkamera 22 die Drehachse 18 und liegt der gesamte Gegenstand 12 im Sichtfeld 26 der Flächenkamera 22.

Es ist auch denkbar, dass nur ein Teil des Gegenstandes 12 im Sichtfeld 26 liegt.

Die Flächenkamera 22 ist mit einem Computer 28 verbunden. Bevorzugt ist auch der Motor 20 zu dessen Ansteuerung und der Encoder mit dem Computer 28 verbunden.

Im gezeigten Ausführungsbeispiel weist die Vorrichtung weiter zwei Beleuchtungseinrichtungen 30, 32 auf.

Die erste Beleuchtungseinrichtung 30 befindet sich, in Richtung der optischen Achse 24, zwischen dem Drehteller 16 und der Flächenkamera 22. Sie weist einen mit 45° zur optischen Achse 24 angeordneten halbdurchlässigen Spiegel auf, durch welchen hindurch das Sichtfeld 26 verläuft. Oberhalb des Spiegels 34 ist eine Beleuchtungsquelle 36, beispielsweise in Form einer LED-Matrix angeordnet. Zwischen dem Spiegel 34 und der Beleuchtungsquelle 36 kann sich eine Strichblende 38 befinden, um mit dem um den Spiegel 34 umgelenkten Licht den Gegenstand 12 in einem beispielsweise parallel zur Drehachse 18 verlaufenden Lichtstreifen, welcher sich über den Gegenstand 12 erstreckt, mit Auflicht zu beleuchten.

In Richtung der optischen Achse 24 bezüglich des Drehtellers 16 auf der der Flächenkamera 22 abgewandten Seite befindet sich die zweite Beleuchtungseinrichtung 32. Diese beleuchtet den Gegenstand 12 mit Durchlicht.

Je nach Bedürfnis kann auf die erste Beleuchtungseinrichtung 30 oder die zweite Beleuchtungseinrichtung 32 verzichtet werden. Es ist auch denkbar, weitere Beleuchtungseinrichtungen, beispielsweise speziell für eine Dunkelfeldbeleuchtung, vorzusehen.

Weiter ist es denkbar, anstelle des Drehtellers 16 eine lineare Bewegungseinrichtung vorzusehen, um den Gegenstand 12 in einer bestimmten Richtung R durch das Sichtfeld 26 hindurch zu bewegen. Diese Ausführungsform kann insbesondere dann von Vorteil sein, wenn die Oberfläche eines flachen beziehungsweise ebenen Gegenstandes optisch zu prüfen ist.

Im gezeigten Ausführungsbeispiel macht die Flächenkamera 22 zehn Bilder pro Sekunde, somit dreihundert Bilder des Gegenstandes 12 während dessen einen Umdrehung um die Drehachse 18. Die gesamte Folge dieser dreihundert Bilder wird gespeichert. Beispielsweise erfolgt die Speicherung der Folge der Bilder in der Flächenkamera 22 und werden die Bilder anschliessend an den Computer 28 übertragen; dies zur Speicherung und anschliessenden Bearbeitung. Es ist auch möglich, jedes Bild sofort nach der Aufnahme an den Computer 28 zu übermitteln.

Wird eine schnellere Flächenkamera 22 verwendet, kann die Drehgeschwindigkeit grösser gewählt werden.

Auch bei einer Ausführungsform mit einer linearen Bewegungsvorrichtung macht die Flächenkamera in rascher Folge eine grosse Anzahl Bilder des Gegenstandes 12.

Die Anzahl Bilder, welche vom Gegenstand 12 aufgenommen werden, kann entsprechend den Bedürfnissen gewählt werden.

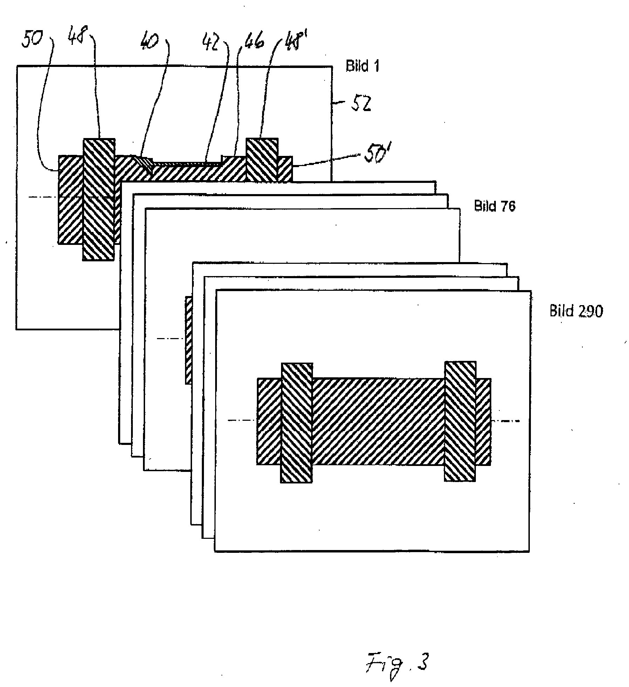

Das erfindungsgemässe Verfahren, wie es mit einer Vorrichtung gemäss den Figuren 1 und 2 durchgeführt werden kann, wird anhand der Figuren 3 bis 12 dargelegt.

Als Prüfling wird ein Gegenstand 12 herangezogen, welcher zu seiner Längsachse 14 rotationssymmetrisch aufgebaut ist, mit der Ausnahme einer einen Pfeil 40 darstellenden Vertiefung 42 in der, die zu prüfende Oberfläche 10 bildenden Mantelfläche 44 des Gegenstandes 12.

Der Gegenstand 12 ist durch einen kreiszylinderförmigen Kernteil 46 mit einer ersten und einer zweiten umlaufenden, bezüglich des Kernteils 46 in radialer Richtung vorstehenden, ringförmigen, im Querschnitt rechteckigen Verdickung 48 beziehungsweise 48' gebildet. In Richtung der Längsachse 14 gesehen, zwischen den beiden Verdickungen 48, 48' befindet sich im Kernteil 46 die Vertiefung 42. Die erste Verdickung 48 ist von einem ersten Ende 50 des Kernteils 46 um einen Abstand distanziert, welcher grösser ist, als der Abstand zwischen dem gegenüberliegenden Ende 50' des Kernteils 46 und der zweiten Verdickung 48'. Der Gegenstand 10 weist beispielsweise in Richtung der Längsachse 14 gemessen eine Länge von 6 mm und einen grössten Durchmesser von 3 mm auf.

Selbstverständlich ist der gezeigte Gegenstand 12 nur ein Beispiel für die Veranschaulichung des erfindungsgemässen Verfahrens.

Der Gegenstand 12 wird mittels des angetriebenen Drehtellers 16 um seine Längsachse 14 gedreht, wobei während einer Umdrehung vom Gegenstand 12 eine Folge von beispielsweise 300 Bildern 52 mittels der Flächenkamera 22 aufgenommen wird. Jedes dieser Bilder 52 zeigt im gezeigten Ausführungsbeispiel den ganzen Gegenstand 12. Die Folge von Bildern ist in Figur 3 anhand einiger Bilder symbolisiert.

Alle mit der Flächenkamera 22 aufgenommenen Bilder 52 der Folge von Bildern 52 werden entweder in der Flächenbildkamera 22 gespeichert und anschliessend an den Computer 28 übermittelt oder jeweils zur Speicherung direkt an den Computer 28 übermittelt.

Bevorzugt wird auch ein Signal des Encoders 20 während der Aufnahme der Bilder 52 an den Computer 28 übermittelt, so dass jedem Bild 52 eine bestimmte Drehlage des Drehtellers 16 und des darauf angeordneten Gegenstandes 12 zugeordnet werden kann.

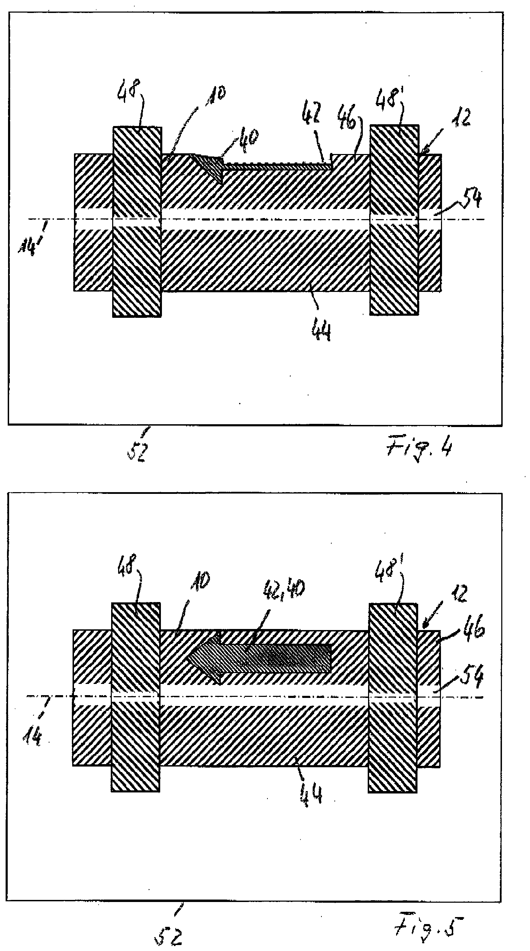

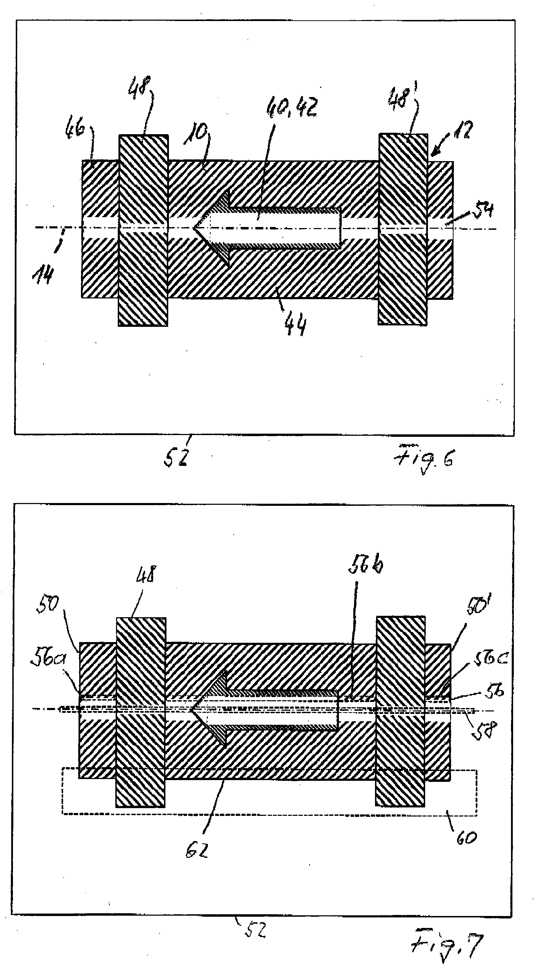

Aus der aufgenommenen Folge von Bildern 52 zeigen beispielsweise Figur 4 das erste Bild 52, Figur 5 das achtunddreissigste Bild 52 und Figur 6 das sechsundsiebzigste Bild 52.

Aufgrund des mittels der ersten Beleuchtungseinrichtung 30 erzeugten. Auflichts erscheint ein Abschnitt 54 des Gegenstandes 12 hell. Dieser Abschnitt 54 erstreckt sich im gezeigten Ausführungsbeispiel über die gesamte Länge des Gegenstandes 12 und symmetrisch zur Drehachse 18 und Längsachse 14. In Richtung des Durchmessers gemessen beträgt die Breite des Abschnitts 54, welche mittels Auflicht beleuchtet ist, etwa zehn Prozent des Durchmessers. Die Breite ist im Bereich der ersten und zweiten Verdickung 48, 48' geringer, als an der Oberfläche des Kernteils 46, wegen der unterschiedlichen Nähe zur ersten Beleuchtungseinrichtung 30.

weiter erscheint der Hintergrund hell infolge der Durchlicht-Beleuchtung mittels der zweiten Beleuchtungseinrichtung 32. Die Schraffuren deuten jene Ausschnitte des Gegenstandes 12, welche im Schatten des Durchlichts und sich nicht im Auflicht befinden.

Der einfachen Verständlichkeit halber sei erwähnt, dass in Figur 5 gegenüber Figur 4 der Gegenstand 12 um etwa 45°, und in Figur 6 gegenüber Figur 4 um etwa 90° gedreht ist.

In Figur 7 ist das Bild 52 aus Figur 6 herangezogen, um drei Bereiche zu erläutern, welche aus den Bildern 52 extrahiert werden.

Da alle Bilder 52 vollständig gespeichert werden, ist es möglich, nach dem Aufnehmen der Bilder 52 die Dimensionen und die Lage der Bereiche zu wählen. So kann ein Bereich beispielsweise die Höhe nur eines Pixels aufweisen, was der Eigenschaft einer Zeilenkamera entsprechen würde. Der Bereich kann jedoch auch die Höhe einer gewünschten Anzahl von Pixel aufweisen.

Weiter kann sich ein Bereich aus mehreren Teilbereichen zusammensetzen, welche in Richtung der Längsachse voneinander beabstandet sein können. Als Beispiel dazu ist in Figur 7 ein erster Extraktionsbereich 56 veranschaulicht. Er ist im Übergangsbereich von hell (infolge Auflicht) in dunkel gewählt und setzt sich aus drei Teilbereichen 56a, 56b und 56c zusammen. Der erste Teilbereich 56a erstreckt sich vom ersten Ende 50 bis zur ersten Verdickung 48; der Teilbereich 56b erstreckt sich von der ersten Verdickung 48 bis zur zweiten Verdickung 48', und der Teilbereich 56c erstreckt sich von der zweiten Verdickung bis zum Ende 50'.

Der erste Extraktionsbereich 56 stellt sich somit als Streifen 57 dar, welcher sich aus Teilstreifen entsprechend den Teilbereichen 56a, 56b, 56c zusammensetzt. Er hat hier die Breite von beispielsweise vier Pixel.

Ein zweiter Extraktionsbereich 58 ist in der Mitte des Abschnitts 54 des Auflichts gewählt. Er erstreckt sich ununterbrochen über die gesamte Länge des Gegenstandes 12, und in der Höhe gesehen nur über einen Teilbereich der Höhe des Abschnitts 54.

Hier bildet der Extraktionsbereich 58 einen ununterbrochenen Streifen 57. Auch er hat hier die Breite von beispielsweis vier Pixel.

Ein dritter Extraktionsbereich 60 ist ebenfalls mittels eines gestrichelt angedeuteten Rechtecks veranschaulicht, in welchem sowohl der Rand 62 des Kernteils 46 als auch der Verdickungen 48, 48' liegt.

Dieser Extraktionsbereich 60 bildet einen ununterbrochenen Streifen 57, dessen Breite jedoch grösser ist, hier beispielsweise ca. 100 Pixel.

Aus den Bildern 52 der Folge von Bildern werden mittels des Computers 28 jeweils die drei Extraktionsbereiche 56 extrahiert und zu Abwicklungen 64' darstellenden Oberflächenbildern 64 zusammengesetzt, welche die Oberfläche 10 in der Charakteristik der entsprechenden Beleuchtung zeigen.

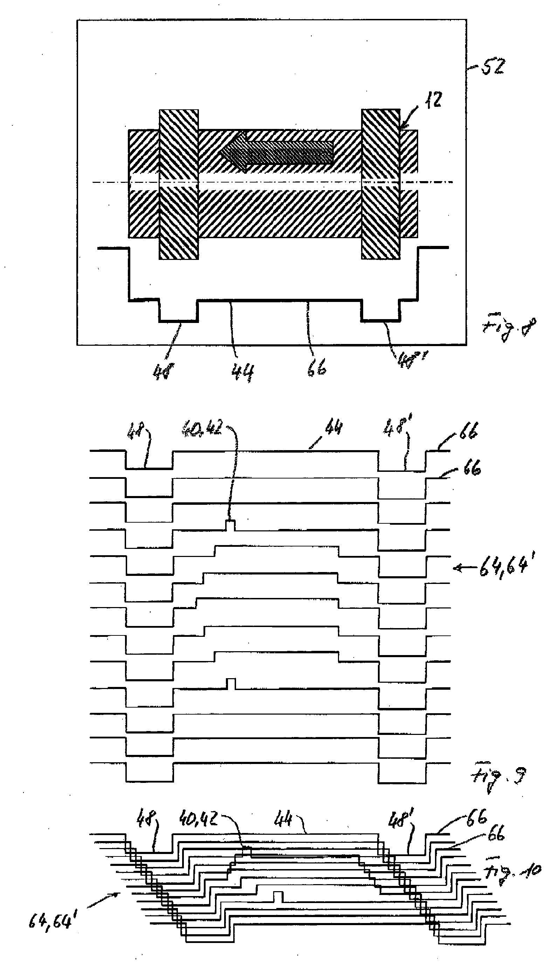

Figur 8 zeigt den Gegenstand entsprechend der Drehlage in Figur 5, wobei eine Linie 66 das durch Auswertung des dritten Extraktionsbereichs 60 erlangte Profil 66 des Gegenstandes 12 zeigt. Die Auswertung erfolgt entlang des Helligkeitsunterschiedes zwischen dem Durchlicht und des im Schatten liegenden Bereichs des Gegenstandes 12. Das Profil 66 entspricht dem Rand 62 im betreffenden Bild 52.

Mittels allgemein bekannter Bildverarbeitung wird im dritten Extraktionsbereich 60 jeden Bildes 52 das Profil 66 bestimmt, und anschliessend werden die Profile 66 - in der Reihenfolge der Aufnahme der Bilder 52 - zum das Höhenprofil wiedergebenden Oberflächenbild 64 zusammengesetzt, wie es in den Figuren 9 und 10 angedeutet ist. Es sei jedoch bemerkt, dass der besseren Übersichtlichkeit halber nur eine Auswahl der bearbeiteten dritten Extraktionsbereiche 60 gezeigt ist.

In Figur 9 sind die erzeugten Profillinien 66 in einer Richtung rechtwinklig zur Längsachse 14 aneinandergereiht, während sie in Figur 10 aufeinanderfolgend seitlich versetzt aneinandergereiht sind.

Die auf diese Art und Weise aus dem dritten Extraktionsbereich 60 erzeugten synthetischen Oberflächenbilder 64 entsprechen einem Tiefenbild.

An dieser Stelle sei erwähnt, dass die Profile 66 auch als Gitternetz, als Grauwertbild oder in höhencodierten Farben darstellbar sind.

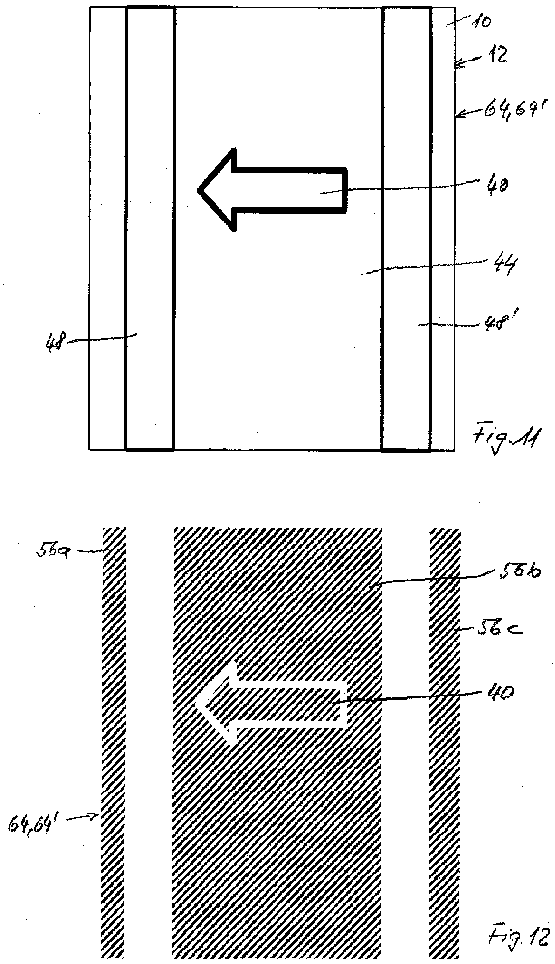

Eine mögliche Synthese aus den zweiten Extraktionsbereichen 58 der Folge der Bilder 52 zeigt Figur 11. Hier sind die im Hellfeld liegenden zweiten Extraktionsbereiche 58 der Bilder 52 - ohne weitere Bearbeitung mittels Bildbearbeitung - zum Oberflächenbild 64 zusammengesetzt. Es ist damit eine synthetisierte Abwicklung 64' erzeugt, mit der Charakteristik einer Auflichtbeleuchtung.

Aus dem dritten Extraktionsbereich 60 der Bilder 52 - insbesondere aus dem Profil 66 - lässt sich beispielsweise der Unrundlauf des Gegenstandes 12 ermitteln, indem festgestellt wird, wo das Profil 66 bezüglich der beispielsweise mittels des Encoders 20 vorgegebenen Soll-Lage liegt.

Dies kann dazu verwendet werden, den zweiten Extraktionsbereich 58 entsprechend nachzuführen, so dass dieser sich immer bezüglich beim entsprechenden Bild ermittelten Profil 66 am selben Ort befindet. Es ist selbstverständlich auch möglich, für alle Bilder 52 den zweiten Extraktionsbereich 58 stationär zu halten.

Figur 12 zeigt das Oberflächenbild 64, hergestellt durch Aneinanderreihung des ersten Extraktionsbereichs 56. Es stellt eine synthetisierte Abwicklung 64' entsprechend der Charakteristik einer Dunkelfeldbeleuchtung dar. Es sei erwähnt, dass der erste Extraktionsbereich 56 aus den drei voneinander beabstandeten Teilbereichen 56a, 56b und 56c besteht, wie dies im Zusammenhang mit Figur 7 weiter oben erläutert ist.

Aus den gezeigten Beispielen ist erkennbar, dass die erfindungsgemässe Speicherung der Folge von Bildern 52 des vorzugsweise gesamten Gegenstandes 12 - und nicht nur die Speicherung der Daten der Extraktionsbereiche 56, 58, 60 - das Synthetisieren unterschiedlichster Oberflächenbilder 64 aus einer einzigen Aufnahmesequenz ermöglicht.

Die aufeinanderfolgenden Bilder 52 der Folge von Bildern überlappen sich stark.

Je nach Art der Fehler in der Oberfläche 10 des Gegenstandes 12 lassen sich diese im Auflicht, im Durchlicht oder in Dunkelfeldbeleuchtung besonders gut erkennen, so beispielsweise Unrundlauf oder Profilfehler in Durchlichtbeleuchtung, Kratzer, Vorsprünge, Dellen oder Schmutz in Dunkelfeldbeleuchtung, Druckfehler oder Farbfehler im Auflicht.

## Patentansprüche

1. Verfahren zur optischen Prüfung der Oberfläche eines Gegenstandes, bei welchem der Gegenstand (12) und eine Flächenkamera (22) in einer Richtung (R) relativ zueinander bewegt werden, während der Relativbewegung mit der Flächenkamera (22) vom Gegenstand (12) eine Folge von Bildern (52) aufgenommen wird, der Gegenstand (12) während des Aufnehmens der Folge der Bilder (52) mittels einer Beleuchtungseinrichtung (30, 32) beleuchtet wird, die Bilder (52) gespeichert werden, von den gespeicherten Bildern (52) jeweils ein Bereich (56, 58, 60), welcher kleiner als das jeweilige Bild (52) ist, extrahiert wird und die extrahierten Bereiche (56, 58, 60) zu einem Oberflächenbild (64) des Gegenstandes (12) zusammengesetzt werden, **dadurch gekennzeichnet, dass** die aufeinanderfolgenden Bilder sich überlappen, der Gegenstand so beleuchtet wird, dass Bereiche der Bilder unterschiedliche Beleuchtungscharakteristik aufweisen, und dass unterschiedliche Oberflächenbilder (64) erzeugt werden, indem von jedem der gespeicherten Bilder (52) aus der einzigen Folge von Bildern (52) die betreffenden Bereiche (56, 58, 60), einer bestimmten Beleuchtungscharakteristik entsprechend, extrahiert und zu neuen Oberflächenbildern (64) zusammengesetzt werden.

2. Verfahren nach Anspruch 1, **dadurch gekennzeichnet, dass** der zu extrahierende Bereich (56, 58, 60) die Form eines Streifens (57) aufweist, welcher wenigstens annähernd rechtwinklig zur Richtung (R) verläuft.

3. Verfahren nach Anspruch 1 oder 2, **dadurch gekennzeichnet, dass** der aus den Bildern (52) extrahierte Bereich (56, 58, 60) mittels Bildverarbeitung bearbeitet und dann die bearbeiteten extrahierten Bereiche (56, 58, 60) zum Oberflächenbild (64) zusammengesetzt werden.

4. Verfahren nach einem der Ansprüche 1 bis 3, **dadurch gekennzeichnet, dass** der Gegenstand (12) im Sichtfeld (26) der vorzugsweise stationär angeordneten Flächenkamera (22) in der Richtung (R) gedreht wird.

5. Verfahren nach Anspruch 4, **dadurch gekennzeichnet, dass** der Gegenstand (12) um eine vorzugsweise rechtwinklig zur optischen Achse (24) der Flächenkamera (22) verlaufende Drehachse (18) vollständig gedreht wird und dabei wenigstens einhundert, vorzugsweise wenigstens etwa dreihundert Bilder aufgenommen werden.

6. Verfahren nach Anspruch 5, **dadurch gekennzeichnet, dass** aus den extrahierten Bereichen (56, 58, 60) der Bilder (52) eine Abwicklung (64') zusammengesetzt wird.

7. Verfahren nach einem der Ansprüche 1 bis 6, **dadurch gekennzeichnet, dass** der Gegenstand (12) während des Aufnehmens der Folge der Bilder (52) mittels mindestens zwei Beleuchtungseinrichtungen (30, 32) gleichzeitig beleuchtet wird.

8. Verfahren nach Anspruch 7, **dadurch gekennzeichnet, dass** der Gegenstand (12) mittels ein Auflicht und/oder ein Durchlicht und/oder eine Dunkelfeldbeleuchtung erzeugenden Beleuchtungseinrichtungen (30, 32) beleuchtet wird.

9. Verfahren nach einem der Ansprüche 1 bis 8, **dadurch gekennzeichnet, dass** aus den Bildern (52) ein Bereich (60) extrahiert wird, in welchem ein Rand (62) des Gegenstandes (12) liegt, aufgrund des Ortes des Randes (62) in diesem Bereich (60) in den Bildern (52) mindestens ein weiterer zu extrahierender Bereich (56, 58) nachgeführt wird, und der extrahierte weitere Bereich (56, 58) zum Oberflächenbild zusammengesetzt wird.

10. Verfahren nach einem der Ansprüche 1 bis 9, **dadurch gekennzeichnet, dass** die aufeinanderfolgenden Bilder (52) sich mindestens zu 90%, vorzugsweise zu mindestens 98%, insbesondere zu mehr als 99%, jedoch weniger als 100% überlappen.

11. Verfahren nach Anspruch 2 und 10, **dadurch gekennzeichnet, dass** die Breite des Streifens (57) wenigstens annähernd der Differenz zwischen der effektiven Überlappung und einer vollständigen Überlappung entspricht.

12. Verfahren nach einem der Ansprüche 1 bis 11, **dadurch gekennzeichnet, dass** die Bilder (52) in gleichen Abständen der Relativbewegung aufgenommen werden.

## Claims

1. Method for optically examining the surface of an object, in which the object (12) and an area-scan camera (22) are moved relative to one another in a direction (R), a sequence of images (52) of the object (12) is recorded with the area-scan camera (22) during the relative movement, the object (12) is illuminated using an illumination device (30, 32) during the recording of the sequence of the images (52), the images (52) are stored, in each case one region (56, 58, 60), which is smaller than the respective image (52), is extracted from the stored images (52) and the extracted regions (56, 58, 60) are joined together to form a surface image (64) of the object (12), **characterized in that** the successive images overlap, the object is illuminated in a manner such that regions of the images have different illumination characteristics, and **in that** different surface images (64) are produced by extracting the relevant regions (56, 58, 60) from each of the stored images (52) from the single sequence of images (52) according to a specific illumination characteristic and joining said regions together to form new surface images (64).

2. Method according to Claim 1, **characterized in that** the region (56, 58, 60) to be extracted has the shape of a strip (57), which extends at least approximately at a right angle with respect to the direction (R).

3. Method according to Claim 1 or 2, **characterized in that** the region (56, 58, 60), which has been extracted from the images (52), is processed by way of image processing and the processed extracted regions (56, 58, 60) are then joined together to form the surface image (64).

4. Method according to one of Claims 1 to 3, **characterized in that** the object (12) is rotated in the direction (R) within the field of view (26) of the area-scan camera (22), which is preferably arranged to be stationary.

5. Method according to Claim 4, **characterized in that** the object (12) is rotated completely about an axis of rotation (18), which preferably extends at a right angle with respect to the optical axis (24) of the area-scan camera (22), and at least one hundred, preferably at least approximately three hundred images, are recorded in the process.

6. Method according to Claim 5, **characterized in that** a development (64') is joined together from the extracted regions (56, 58, 60) of the images (52).

7. Method according to one of Claims 1 to 6, **characterized in that** the object (12) is illuminated using at least two illumination devices (30, 32) at the same time during the recording of the sequence of the images (52).

8. Method according to Claim 7, **characterized in that** the object (12) is illuminated using illumination devices (30, 32) that produce reflected light and/or transmitted light and/or dark field illumination.

9. Method according to one of Claims 1 to 8, **characterized in that** extracted from the images (52) is a region (60) in which an edge (62) of the object (12) is located, on the basis of the location of the edge (62) in said region (60) at least one further region (56, 58) to be extracted is tracked in the images (52), and the extracted further region (56, 58) is joined together to form the surface image.

10. Method according to one of Claims 1 to 9, **characterized in that** the successive images (52) overlap by at least 90%, preferably at least 98%, in particular more than 99%, but by less than 100%.

11. Method according to Claims 2 and 10, **characterized in that** the width of the strip (57) corresponds to at least approximately the difference between the effective overlap and a complete overlap.

12. Method according to one of Claims 1 to 11, **characterized in that** the images (52) are recorded at equal distances of the relative movement.

## Revendications

1. Procédé pour le contrôle optique de la surface d'un objet, dans lequel l'objet (12) et une caméra de surface (22) sont déplacés relativement entre eux dans une direction (R), pendant le mouvement relatif une séquence d'images (52) de l'objet (12) est prise avec la caméra de surface (22), pendant la prise de la séquence d'images (52) l'objet (12) est éclairé au moyen d'un dispositif d'éclairage (30, 32), les images (52) sont enregistrées, chaque fois une zone (56, 58, 60), laquelle est plus petite que l'image (52) respective, est extraite des images enregistrées (52) et les zones extraites (56, 58, 60) sont assemblées en une image de surface (64) de l'objet (12),
**caractérisé en ce que** les images successives se chevauchent, l'objet étant éclairé de telle sorte que des zones des images présentent des caractéristiques d'éclairage différentes, et que des images de surface (64) différentes sont générées **en ce que** l'on extrait de chacune des images (52) enregistrées de l'unique séquence d'images (52) les zones (56, 58, 60) en question, conformément à une caractéristique d'éclairage définie, et les assemble en de nouvelles images de surface (64).

2. Procédé selon la revendication 1, **caractérisé en ce que** la zone à extraire (56, 58, 60) présente la forme d'une bande (57) qui s'étend au moins approximativement à angle droit par rapport à la direction (R).

3. Procédé selon la revendication 1 ou 2, caractérisé la zone (56, 58, 60) extraite à partir des images (52) est traitée au moyen d'un traitement d'image et qu'ensuite, les zones extraites traitées (56, 58, 60) sont assemblées pour donner l'image de surface (64).

4. Procédé selon l'une des revendications 1 à 3, **caractérisé en ce que** l'objet (12) dans le champ visuel (26) de la caméra de surface (22) de préférence disposée de façon stationnaire est tourné dans la direction (R).

5. Procédé selon la revendication 4, **caractérisé en ce que** l'on fait complètement tourner l'objet (12) autour d'un axe de rotation (18) s'étendant de préférence en angle droit par rapport à l'axe optique (24) de la caméra de surface (22) et que ce faisant, au moins cent, de préférence au moins près de trois cent images sont prises.

6. Procédé selon la revendication 5, **caractérisé en ce qu'**à partir des zones extraites (56, 58, 60) des images (52), on assemble un développement (64').

7. Procédé selon l'une des revendications 1 à 6, **caractérisé en ce que**, pendant la prise de la séquence d'images (52), l'objet (12) est éclairé simultanément au moyen d'au moins deux dispositifs d'éclairage (30, 32).

8. Procédé selon la revendication 7, **caractérisé en ce que** l'objet (12) est éclairé au moyen de dispositifs d'éclairage (30, 32) générant une lumière incidente et/ou une lumière transmise et/ou un éclairage de fond noir.

9. Procédé selon l'une des revendications 1 à 8, **caractérisé en ce qu'**à partir des images (52), on extrait une zone (60) dans laquelle se situe un bord (62) de l'objet (12), en raison du lieu du bord (62) dans cette zone (60), au moins une autre zone (56, 58) à extraire est localisée dans les images (52), et l'autre zone (56, 58) extraite est assemblée pour donner l'image de surface.

10. Procédé selon l'une des revendications 1 à 9, **caractérisé en ce que** les images successives (52) se chevauchent au moins à 90%, de préférence au moins à 98%, en particulier à plus de 99%, mais cependant à moins de 100%.

11. Procédé selon la revendication 2 et 10, **caractérisé en ce que** la largeur de la bande (57) correspond au moins approximativement à la différence entre le chevauchement effectif et un chevauchement complet.

12. Procédé selon l'une des revendications 1 à 11, **caractérisé en ce que** les images (52) sont prises à intervalles égaux du mouvement relatif.
